# EUROPEAN PATENT APPLICATION

(11) **EP 4 749 270 A1**
(43) Date of publication of application: **27.05.2026**
(21) Application number: 24845567.7
(22) Date of filing: 19.07.2024
(51) Int. Cl.: G01N 23/04, G01N 23/18

(54) **CONTROL DEVICE, CONTROL METHOD, AND CONTROL PROGRAM**

(30) Priority: 21.07.2023 JP 2023119447
(71) Applicant: FUJIFILM Corporation, Tokyo 106-8620 (JP)
(72) Inventor: IKEDA, Haruka, Tokyo 106-8620 (JP)
(74) Representative: Meissner Bolte Partnerschaft mbB
(86) International application number: PCT/JP2024/026033
(87) International publication number: WO 2025/023191

(57) **Abstract**

A control device includes at least one processor. The processor is configured to cause a display device to display an inspection target image obtained by capturing an image of an inspection target of a nondestructive inspection; and when the displayed inspection target image includes two or more discontinuities of the inspection target, cause a frame for inspecting a discontinuity to be displayed in a size based on a predetermined dimension such that the frame is superimposed on the inspection target image and that at least one of movement or rotation of the frame relative to the inspection target image is possible.

## Description

### Technical Field

The present disclosure relates to a control device, a control method, and a control program.

### Background Art

Hitherto, a nondestructive inspection has been performed using an inspection target image obtained by capturing an image of an inspection target. In the technique described in WO2022/014019A, the position and size of a discontinuity in a welded portion of an inspection target are detected from image data indicating the distribution of the intensity of transmitted radiation.

### SUMMARY OF INVENTION

A method of evaluating a discontinuity of an inspection target based on the discontinuity in a predetermined gauge is known as a nondestructive inspection method. For example, in an inspection conforming to a standard such as Japanese Industrial Standards (JIS) or International Organization for Standardization (ISO), an inspection target image obtained by capturing an image of an inspection target and a gauge defining an inspection range are superimposed one on another, and a discontinuity of the inspection target is evaluated based on the discontinuity in the gauge. In such an evaluation, adjusting the position of the gauge is meticulous work, which involves an issue of an increase in the burden on a user who performs the evaluation, a decrease in the inspection efficiency, and the like.

The present disclosure has been made in consideration of the above-described circumstances, and an object of the present disclosure is to provide a control device, a control method, and a control program that are capable of supporting evaluation of a discontinuity of an inspection target.

A control device according to a first aspect of the present disclosure includes at least one processor. The at least one processor is configured to: cause a display device to display an inspection target image obtained by capturing an image of an inspection target of a nondestructive inspection; and when the displayed inspection target image includes two or more discontinuities of the inspection target, cause a frame for inspecting a discontinuity to be displayed in a size based on a predetermined dimension such that the frame is superimposed on the inspection target image and that at least one of movement or rotation of the frame relative to the inspection target image is possible.

In a control device according to a second aspect of the present disclosure, in the control device according to the first aspect, the frame is a figure corresponding to a gauge.

In a control device according to a third aspect of the present disclosure, in the control device according to the first aspect, the frame is a figure equivalent to a gauge defined by a standard of Japanese Industrial Standards (JIS) or International Organization for Standardization (ISO) regarding a nondestructive inspection.

In a control device according to a fourth aspect of the present disclosure, in the control device according to the first aspect, the at least one processor is configured to relatively move the frame such that a first auxiliary line and a second auxiliary line have a predetermined positional relationship, the first auxiliary line being provided in accordance with positions of the discontinuities, the second auxiliary line being provided in accordance with a position of the frame.

In a control device according to a fifth aspect of the present disclosure, in the control device according to the fourth aspect, the first auxiliary line is a line segment connecting centers of gravity of two of the discontinuities.

In a control device according to a sixth aspect of the present disclosure, in the control device according to the fourth aspect, the first auxiliary line is a line segment connecting points in regions of two of the discontinuities, and when a plurality of the line segments are present, a longest line segment among the plurality of line segments is regarded as the first auxiliary line.

In a control device according to a seventh aspect of the present disclosure, in the control device according to the fourth aspect, when the frame has a rectangular shape, the second auxiliary line is at least one of diagonal lines of the rectangular frame, and when the frame has a circular shape, the second auxiliary line is at least one line corresponding to a diameter of the circular frame.

In a control device according to an eighth aspect of the present disclosure, in the control device according to the first aspect, the at least one processor is configured to, when the discontinuity of which at least a part is present within the frame has a region superimposed on the frame, present information indicating that the discontinuity has the region.

In a control device according to a ninth aspect of the present disclosure, in the control device according to the eighth aspect, the at least one processor is configured to, to present the information, cause a portion of the frame superimposed on the discontinuity that is not entirely within the frame to be displayed so as to be emphasized relative to an other portion.

In a control device according to a tenth aspect of the present disclosure, in the control device according to the first aspect, the at least one processor is configured to: when the discontinuities are three or more discontinuities, extract two discontinuities as a pair; cause a straight line connecting the two discontinuities of the extracted pair to be displayed; receive a user's input corresponding to the straight line; and perform display in accordance with the received input in association with the straight line.

In a control device according to an eleventh aspect of the present disclosure, in the control device according to the first aspect, the at least one processor is configured to: cause the inspection target image to be displayed, the inspection target image including an inspection target image of a most part of an image capturing range of the inspection target and an enlarged inspection target image in which a part of the inspection target image is enlarged; and when one of the frame displayed so as to be superimposed on the inspection target image of the most part of the inspection target and the frame displayed so as to be superimposed on the enlarged inspection target image is moved or rotated relative to the inspection target image, move or rotate an other of the frames together.

In a control device according to a twelfth aspect of the present disclosure, in the control device according to the first aspect, a correspondence between at least one of a type, a size, or a length of the discontinuity and a score is predetermined, and the at least one processor is configured to: derive, based on the correspondence, a score of the discontinuity of which at least a part is present within the frame; and when a plurality of the discontinuities of which at least a part is present within the frame are present, further derive a total score.

In a control device according to a thirteenth aspect of the present disclosure, in the control device according to the twelfth aspect, the at least one processor is configured to record the frame and a region of the inspection target image including at least the discontinuities of which at least a part is present within the frame, in association with the total score, in a state in which the frame and the region are displayed on the display device.

To achieve the above-described object, in a control method according to a fourteenth aspect of the present disclosure, a processor included in a control device causes a display device to display an inspection target image obtained by capturing an image of an inspection target of a nondestructive inspection; and when the displayed inspection target image includes two or more discontinuities of the inspection target, causes a frame for inspecting a discontinuity to be displayed in a size based on a predetermined dimension such that the frame is superimposed on the inspection target image and that at least one of movement or rotation of the frame relative to the inspection target image is possible.

To achieve the above-described object, a control program according to a fifteenth aspect of the present disclosure causes a processor included in a control device to execute a process including: causing a display device to display an inspection target image obtained by capturing an image of an inspection target of a nondestructive inspection; and when the displayed inspection target image includes two or more discontinuities of the inspection target, causing a frame for inspecting a discontinuity to be displayed in a size based on a predetermined dimension such that the frame is superimposed on the inspection target image and that at least one of movement or rotation of the frame relative to the inspection target image is possible.

According to the present disclosure, it is possible to support evaluation of a discontinuity of an inspection target.

### BRIEF DESCRIPTION OF DRAWINGS

Fig. 1 is a diagram for describing an inspection target and an inspection target image according to an embodiment;
Fig. 2 is a block diagram illustrating an example of the hardware configuration of a control device according to an embodiment;
Fig. 3 is a functional block diagram illustrating an example of the functional configuration of the control device according to an embodiment;
Fig. 4 is a diagram for describing an example of a display state of an inspection target image and a frame;
Fig. 5 is a diagram for describing a frame displayed by a frame display control unit according to an embodiment;
Fig. 6 is a diagram for describing auxiliary lines displayed by an auxiliary line display control unit according to an embodiment;
Fig. 7 is a flowchart illustrating an example of a flow of a control process executed by the control device according to an embodiment;
Fig. 8 is a diagram for describing an example of a display manner for clarifying a confirmed pair of discontinuities;
Fig. 9 is a diagram for describing other embodiments of a frame; and
Fig. 10 is a diagram for describing another embodiment of a frame and a method of deriving a total score.

### DESCRIPTION OF EMBODIMENTS

Hereinafter, an embodiment of the technique of the present disclosure will be described in detail with reference to the drawings. Note that the present embodiment does not limit the present invention.

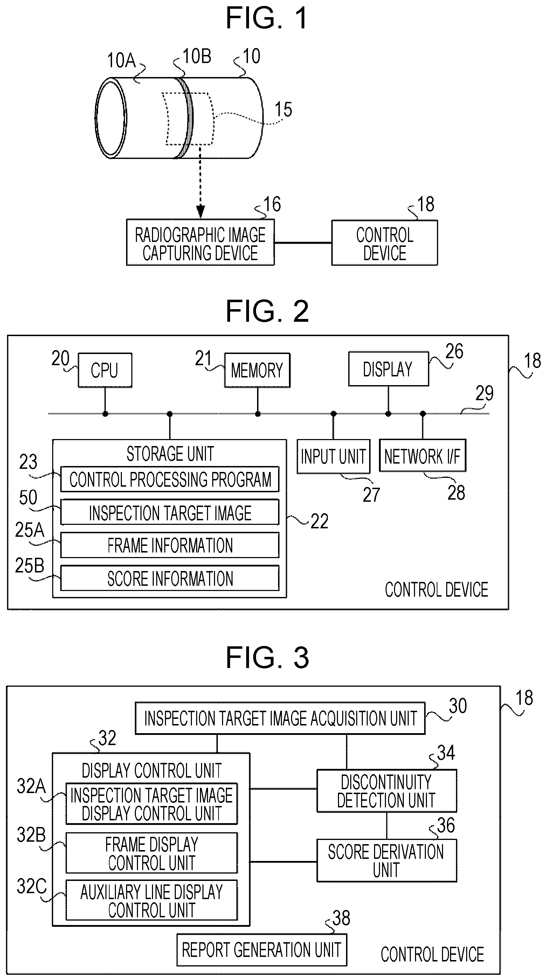

As illustrated in Fig. 1, in the present embodiment, a description will be given of, as an example, a case where an inspection target 10 is a cylindrical object obtained by welding two pipes such as pipes of a natural-gas pipeline to each other, and a discontinuity in a welded portion 10B of the inspection target 10 is evaluated. In the present disclosure, a "discontinuity" includes one that is a possible defect.

A radiographic image capturing device 16 captures a radiographic image in which a range including at least the welded portion 10B in the inspection target 10 is an image capturing range. In the present embodiment, a radiographic image of the inspection target 10 captured by the radiographic image capturing device 16 is referred to as an inspection target image. Thus, the inspection target image includes an image of a pipe portion 10A of the inspection target 10 and an image of the welded portion 10B.

The radiographic image capturing device 16 according to the present embodiment captures an inspection target image, in which a region obtained by dividing the entire welded portion 10B into a plurality of portions is regarded as an image capturing range 15 in one image capturing operation. That is, in the present embodiment, a plurality of inspection target images are obtained for the inspection target 10, and a series of the plurality of inspection target images connected to each other serves as a radiographic image of a region including the welded portion 10B of one round. Alternatively, a radiographic image capturing device 16 capable of capturing one radiographic image of a region including the welded portion 10B of one round may be used instead of the radiographic image capturing device 16 according to the present embodiment, and evaluation of a discontinuity may be performed by using one inspection target image.

The inspection target image obtained by the radiographic image capturing device 16 is output to a control device 18. The control device 18 is a device for supporting evaluation of a discontinuity of the inspection target 10 using an inspection target image obtained by capturing an image of the inspection target 10 of a nondestructive inspection.

Fig. 2 is a block diagram illustrating an example of the hardware configuration of the control device 18 according to the present embodiment. As illustrated in Fig. 2, the control device 18 includes a central processing unit (CPU) 20, a memory 21 serving as a temporary storage region, a nonvolatile storage unit 22, a display 26 such as a liquid crystal display, an input unit 27, and a network interface (I/F) 28. The CPU 20, the memory 21, the storage unit 22, the display 26, the input unit 27, and the network I/F 28 are connected to each other via a bus 29 such as a system bus or a control bus so as to be capable of transmitting and receiving various pieces of information to and from each other.

The CPU 20 controls the entire control device 18. The CPU 20 reads a control processing program 23 from the storage unit 22, develops the control processing program 23 in the memory 21, and executes the developed control processing program 23. The CPU 20 according to the present embodiment is an example of a processor according to the present disclosure, and the control processing program 23 is an example of a control program according to the present disclosure.

The storage unit 22 stores the control processing program 23 to be executed by the CPU 20 and an inspection target image 50 obtained by the radiographic image capturing device 16. The storage unit 22 also stores frame information 25A and score information 25B, which will be described in detail below. Specific examples of the storage unit 22 include a storage medium such as a hard disk drive (HDD), a solid state drive (SSD), or a flash memory.

The input unit 27 receives a user operation, and is, for example, a touch panel, a button, a mouse, a keyboard, or the like. A touch panel display including the display 26 and the input unit 27 integrated together may be adopted. The network I/F 28 performs wired or wireless communication with the radiographic image capturing device 16 via a network. The display 26 according to the present embodiment is an example of a display device according to the present disclosure.

Fig. 3 is a functional block diagram illustrating an example of the functional configuration of the control device 18. As illustrated in Fig. 3, the control device 18 according to the present embodiment includes an inspection target image acquisition unit 30, a display control unit 32, a discontinuity detection unit 34, a score derivation unit 36, and a report generation unit 38. In the control device 18, the CPU 20 executes the control processing program 23 and thereby functions as the inspection target image acquisition unit 30, the display control unit 32, the discontinuity detection unit 34, the score derivation unit 36, and the report generation unit 38.

The inspection target image acquisition unit 30 has a function of acquiring the inspection target image 50. When there is a series of a plurality of inspection target images 50 for one inspection target 10 as described above, the inspection target image acquisition unit 30 according to the present embodiment sequentially acquires the series of inspection target images 50 one by one.

As an example, the inspection target image acquisition unit 30 according to the present embodiment acquires the inspection target image 50 stored in the storage unit 22, but may acquire the inspection target image 50 from the radiographic image capturing device 16. The inspection target image acquisition unit 30 outputs the acquired inspection target image 50 to the display control unit 32 and the discontinuity detection unit 34.

The discontinuity detection unit 34 has a function of detecting, from the inspection target image 50, a discontinuity of the inspection target 10, to be specific, an image corresponding to a discontinuity of the inspection target 10. A method in which the discontinuity detection unit 34 detects a discontinuity from the inspection target image 50 is not particularly limited. For example, the discontinuity detection unit 34 may detect a discontinuity from the inspection target image 50 by using a machine learning model that has learned to detect a discontinuity from an inspection target image including various types of discontinuities. Furthermore, for example, the discontinuity detection unit 34 may detect a discontinuity from the inspection target image 50 by using a known image analysis method of detecting a region different from a surrounding region as a discontinuity region.

The discontinuity detection unit 34 according to the present embodiment assigns, for each of pixels of the inspection target image 50, a detection result which is a value indicating whether the pixel corresponds to a discontinuity. For example, the discontinuity detection unit 34 assigns, for a certain pixel, "1" indicating a discontinuity or "0" indicating no discontinuity. The discontinuity detection unit 34 outputs the detection result to the display control unit 32 and the score derivation unit 36.

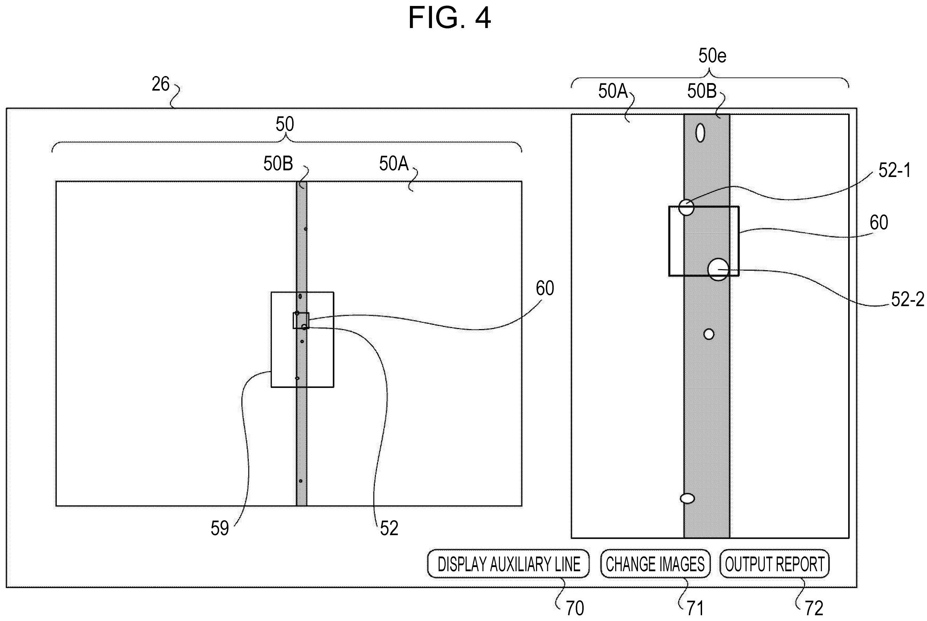

The display control unit 32 includes an inspection target image display control unit 32A, a frame display control unit 32B, and an auxiliary line display control unit 32C. The functions of the inspection target image display control unit 32A, the frame display control unit 32B, and the auxiliary line display control unit 32C will be described with reference to Fig. 4 to Fig. 6.

The inspection target image display control unit 32A has a function of causing the display 26 to display an inspection target image. As illustrated in Fig. 4, the inspection target image display control unit 32A causes the display 26 to display an inspection target image 50 and an enlarged inspection target image 50e side by side. Here, the description that the inspection target image display control unit 32A "causes the display 26 to display" the inspection target image 50 and the enlarged inspection target image 50e also includes a state in which the inspection target image display control unit 32A holds the inspection target image 50 and the enlarged inspection target image 50e in order to cause the display 26 to display them.

In the present embodiment, the inspection target image 50 displayed on the display 26 corresponds to one inspection target image 50 captured by the radiographic image capturing device 16. On the other hand, the enlarged inspection target image 50e is an enlarged inspection target image obtained by enlarging a part of the inspection target image 50. The inspection target image 50 and the enlarged inspection target image 50e illustrated in Fig. 4 each include a pipe portion 50A, which is an image of the pipe portion 10A, and a welded portion 50B, which is an image of the welded portion 10B.

As illustrated in Fig. 4, the inspection target image display control unit 32A according to the present embodiment causes an enlargement range frame 59 indicating the range of the enlarged inspection target image 50e in the inspection target image 50 to be displayed on the inspection target image 50. Each of the enlargement range and the enlargement ratio in the inspection target image 50 may be determined in advance, or may be designated by a user through the input unit 27.

On the other hand, the frame display control unit 32B has a function of causing a frame 60, which is for inspecting a discontinuity and which has a size based on a predetermined dimension, to be displayed such that the frame 60 is superimposed on each of the inspection target image 50 and the enlarged inspection target image 50e and that the frame 60 is movable and rotatable relative to each of the inspection target image 50 and the enlarged inspection target image 50e. Here, the description that the frame display control unit 32B causes the frame 60 "to be displayed" also includes a state in which the frame display control unit 32B holds the frame 60 in order to cause the frame 60 to be displayed.

The frame 60 is a figure corresponding to a gauge. As a specific example, the frame 60 according to the present embodiment is a figure equivalent to a gauge defined by the JIS standard related to a nondestructive inspection. Examples of such a JIS standard include JIS Z 3104-1995 "Methods of radiographic examination for welded joints in steel", JIS Z 3105-2003 "Methods of radiographic examination for welded joints in aluminum", and JIS G 0581-1999 "Methods of radiographic examination for steel castings". The frame 60 may be a figure equivalent to a gauge defined by the ISO standard corresponding to these JIS standards. In the control device 18 according to the present embodiment, information regarding the size and shape of a gauge used in these standards is stored as the frame information 25A in the storage unit 22. As an example, the frame information 25A according to the present embodiment includes information regarding the sizes and shapes of a plurality of types of gauges.

The frame display control unit 32B refers to the frame information 25A and determines the size and shape of the frame 60 to be displayed on each of the inspection target image 50 and the enlarged inspection target image 50e, based on the correspondence between the size and shape of the gauge to be used and the size of the inspection target 10, and the enlargement ratio of the enlarged inspection target image 50e. The frame display control unit 32B then causes the frame 60 having the determined size and shape to be displayed so as to be superimposed on each of the inspection target image 50 and the enlarged inspection target image 50e.

The frame display control unit 32B causes the frame 60 to be displayed when the inspection target image 50 includes two or more discontinuities of the inspection target 10. In the present embodiment, as an example, the frame display control unit 32B causes the frame 60 to be displayed so as to be superimposed on each of the inspection target image 50 and the enlarged inspection target image 50e when the enlarged inspection target image 50e includes two or more discontinuities of the inspection target 10.

With the control device 18 according to the present embodiment, a user is able to move and rotate the frame 60 that is displayed. For example, as a result of operating the input unit 27 to move or rotate the displayed frame 60 while clicking the frame 60, the displayed frame 60 is moved or rotated in accordance with the operation. When one of the frame 60 displayed so as to be superimposed on the inspection target image 50 and the frame 60 displayed so as to be superimposed on the enlarged inspection target image 50e is moved or rotated, the other frame 60 is also moved or rotated together.

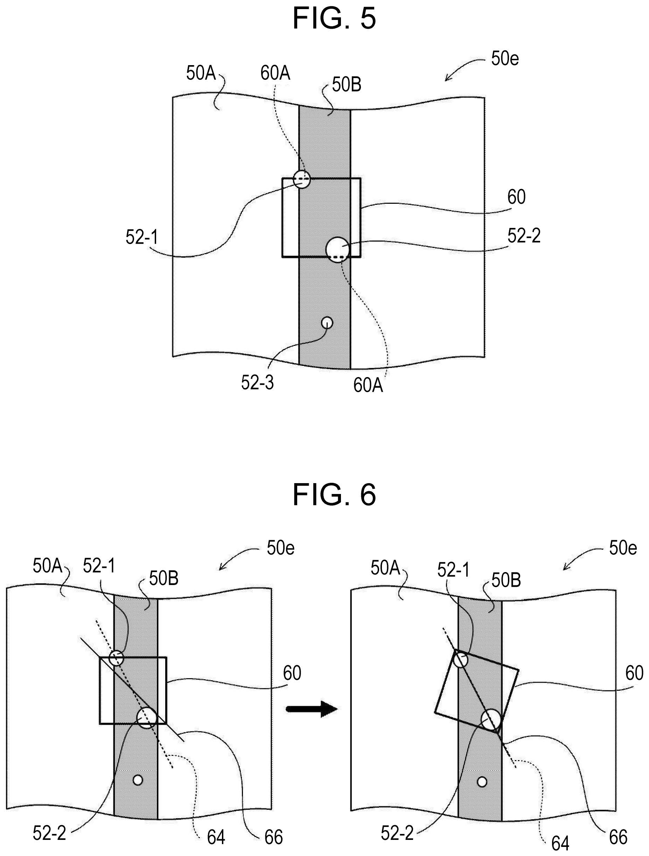

In addition, when a detection result of the discontinuity detection unit 34 indicates that a discontinuity 52 of which at least a part is present within the frame 60 has a region superimposed on the frame 60, the frame display control unit 32B presents information indicating the fact. In the example illustrated in Fig. 5, at least a part of discontinuities 52-1 and 52-2 among discontinuities 52-1, 52-2, and 52-3 included in the enlarged inspection target image 50e is present within the frame 60. In the example illustrated in Fig. 5, the discontinuities 52-1 and 52-2 are not entirely within the frame 60, and thus the frame display control unit 32B causes portions 60A of the frame 60 superimposed on the respective discontinuities 52-1 and 52-2 to be displayed so as to be emphasized relative to the other portion. A method in which the frame display control unit 32B emphasizes the portions 60A of the frame 60 is not limited. For example, the frame display control unit 32B may cause the portions 60A to be displayed in a color more conspicuous than the color of the other portion, or may cause the portions 60A to blink. A case where a discontinuity 52 (52-1, 52-2) has a region superimposed on the frame 60 includes a state in which the outer edge of the discontinuity 52 is superimposed on the frame 60. That is, there may be a case where there is no discontinuity 52 outside the frame 60. Here, "superimposed" includes a case where the coordinates on original data are superimposed and a case where pixels are superimposed on the screen of the display 26.

Accordingly, a user is able to easily determine whether the discontinuity 52 (discontinuities 52-1 and 52-2 in Fig. 5) is entirely within the frame 60.

On the other hand, as illustrated in Fig. 6, the auxiliary line display control unit 32C causes a first auxiliary line 64 and a second auxiliary line 66 to be displayed on the enlarged inspection target image 50e. The first auxiliary line 64 is provided in accordance with the positions of the discontinuities 52, and the second auxiliary line 66 is provided in accordance with the position of the frame 60. In the example illustrated in Fig. 6, the auxiliary line display control unit 32C causes a line segment connecting the center of gravity of the discontinuity 52-1 and the center of gravity of the discontinuity 52-2, at least a part of which is present within the frame 60, to be displayed as the first auxiliary line 64 on the enlarged inspection target image 50e. The first auxiliary line 64 displayed by the auxiliary line display control unit 32C is not limited to the line segment described above. The first auxiliary line 64 may be a line segment connecting points in regions of two discontinuities 52. For example, when there are a plurality of line segments, the longest line segment among the plurality of line segments may be regarded as the first auxiliary line 64. The two discontinuities 52 connected by the first auxiliary line 64 may be, for example, two discontinuities 52 close to each other. Here, "close" can be set as being within a predetermined distance or the like. It is preferable that the distance between the two discontinuities 52 be close to the length of a diagonal line of the frame 60 so that the two discontinuities 52 are sufficiently included within the frame 60. For example, the distance may be within ±10% of the length of the diagonal line of the frame 60. Thus, for example, the two discontinuities 52 may be two discontinuities that are within a predetermined distance and that are closest to the frame 60. Furthermore, for example, the two discontinuities 52 may be designated by a user, and the two discontinuities 52 to be connected by the first auxiliary line 64 may be selectable. When there are three or more discontinuities 52 close to each other, pairs of discontinuities 52 may be suggested in order from the pair in which the distance between the two discontinuities 52 is close to the length of the diagonal line of the frame 60, the user may be allowed to select the most preferable pair of discontinuities 62, and the first auxiliary line 64 may be provided for the selected pair.

The auxiliary line display control unit 32C causes one of the two diagonal lines of the frame 60 to be displayed as the second auxiliary line 66 on the enlarged inspection target image 50e. The second auxiliary line 66 displayed by the auxiliary line display control unit 32C is not limited to the line described above. For example, the second auxiliary line 66 may be both of the two diagonal lines. That is, the number of second auxiliary lines 66 displayed by the auxiliary line display control unit 32C is not limited to one, and may be two or more.

In this way, when the first auxiliary line 64 and the second auxiliary line 66 are provided, the frame display control unit 32B relatively moves the frame 60 such that the first auxiliary line 64 and the second auxiliary line 66 have a predetermined positional relationship. The frame 60 may be moved in accordance with a user instruction provided using the input unit 27, or may be automatically moved.

The predetermined positional relationship between the first auxiliary line 64 and the second auxiliary line 66 is an arrangement relationship between the discontinuities 52 and the frame 60 for disposing the discontinuities 52 within the frame 60 in an appropriate state when the discontinuities 52 are to be evaluated. In the example illustrated in Fig. 6, to make the predetermined positional relationship, the frame display control unit 32B moves the frame 60 so that the first auxiliary line 64 and the second auxiliary line 66 overlap each other, to be specific, so that the first auxiliary line 64 and the second auxiliary line 66 are collinear. Accordingly, in the example illustrated in Fig. 6, the discontinuities 52-1 and 52-2 are the discontinuities 52 to be evaluated. As contrasted with the embodiment illustrated in Fig. 6, the frame display control unit 32B may move the frame 60 so that the first auxiliary line 64 and the second auxiliary line 66 have a positional relationship of being orthogonal to each other.

As illustrated in Fig. 4, the display control unit 32 further causes the display 26 to display an auxiliary line display instruction button 70, an image change instruction button 71, and a report output instruction button 72. The auxiliary line display instruction button 70 is a button to be operated by a user through the input unit 27 to cause the auxiliary line display control unit 32C to display the first auxiliary line 64 and the second auxiliary line 66 described above. In the present embodiment, switching between ON and OFF of the auxiliary line display instruction button 70 enables switching between showing and hiding the first auxiliary line 64 and the second auxiliary line 66.

On the other hand, the image change instruction button 71 is a button to be operated by a user through the input unit 27 to switch the inspection target image 50 to be displayed on the display 26. As described above, when there is a series of a plurality of inspection target images 50 for one inspection target 10, the inspection target image 50 to be displayed on the display 26 is sequentially switched among the series of the plurality of inspection target images 50 by operating the image change instruction button 71. The report output instruction button 72 is a button to be operated by a user through the input unit 27 to output a report on the inspection target image 50, that is, the inspection of the inspection target 10.

The score derivation unit 36 derives, based on the score information 25B stored in the storage unit 22, the score of a discontinuity 52 of which at least a part is present within the frame 60. The score information 25B is information indicating a correspondence between at least one of the type, size, or length of the discontinuity 52 and a score, and the correspondence is predetermined. In the present embodiment, a correspondence based on the above-described standards such as JIS and ISO is used as the score information 25B. For example, as such a correspondence, a method of deriving the type and score of a discontinuity, which is used in a method of classifying a discontinuity image by using a radiograph in JIS Z 3104-1995, or the like can be used. When there are a plurality of discontinuities 52 of which at least a part is present within the frame 60, the score derivation unit 36 further derives a total score.

The score derivation unit 36 is not limited to the one according to the present embodiment. For example, the scores of all the discontinuities 52 present within the inspection target image 50 or the enlarged inspection target image 50e may be derived based on the score information 25B.

The report generation unit 38 records the frame 60 and the region of the enlarged inspection target image 50e including at least the discontinuities 52 (the discontinuities 52-1 and 52-2 in Fig. 6) of which at least a part is present within the frame 60, in association with the total score derived by the score derivation unit 36, in a state in which the frame 60 and the region are displayed on the display 26. To be specific, the report generation unit 38 captures the screen of the display 26 in a state in which the enlarged inspection target image 50e is displayed, and records the captured screen in association with the total score. Hereinafter, information recorded in this manner will be referred to as "evaluation information". In response to the report output instruction button 72 being operated, the report generation unit 38 generates a report based on a predetermined format by using the recorded evaluation information.

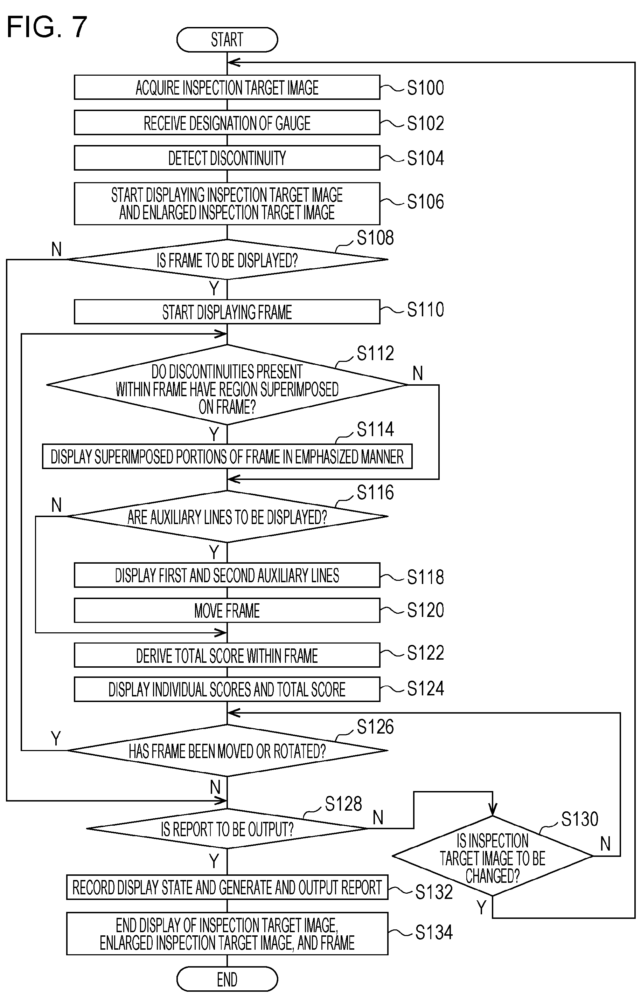

Next, the operation of the control device 18 according to the present embodiment will be described with reference to the drawings. Fig. 7 is a flowchart illustrating an example of the flow of a control process executed by the control device 18. The control process illustrated in Fig. 7 is executed by the CPU 20 executing the control processing program 23.

In step S100 in Fig. 7, the inspection target image acquisition unit 30 acquires one inspection target image 50, as described above. When there is a series of a plurality of inspection target images 50 for one inspection target 10, the inspection target image acquisition unit 30 sequentially acquires one of the inspection target images 50.

Subsequently, in step S102, the frame display control unit 32B receives a user's designation of a gauge to be used for evaluation. As described above, in the present embodiment, the frame information 25A includes information on a plurality of types of gauges, and thus the user selects a gauge to be used for evaluation from among the plurality of types of gauges whose information is included in the frame information 25A.

Subsequently, in step S104, the discontinuity detection unit 34 detects a discontinuity 52 from the inspection target image 50 and assigns, for each of pixels of the inspection target image 50, a detection result which is a value indicating whether the pixel corresponds to a discontinuity, as described above.

Subsequently, in step S106, the inspection target image display control unit 32A causes the display 26 to start displaying the inspection target image 50 and the enlarged inspection target image 50e, as described above.

Subsequently, in step S108, the frame display control unit 32B determines whether to cause the frame 60 to be displayed. In the present embodiment, the frame display control unit 32B causes the frame 60 to be displayed when the enlarged inspection target image 50e includes two or more discontinuities 52, as described above. Thus, the frame display control unit 32B determines, based on the detection result obtained in the foregoing step S104, whether the enlarged inspection target image 50e includes two or more discontinuities 52. When the enlarged inspection target image 50e does not include two or more discontinuities 52, in other words, when the enlarged inspection target image 50e includes no discontinuity 52 or one discontinuity 52, a negative determination is made in step S108, and the process proceeds to step S128. On the other hand, when the enlarged inspection target image 50e includes two or more discontinuities 52, an affirmative determination is made in step S108, and the process proceeds to step S110.

In step S110, the frame display control unit 32B refers to the frame information 25A and starts displaying the frame 60 corresponding to the gauge designated in the foregoing step S102 such that the frame 60 is superimposed on each of the inspection target image 50 and the enlarged inspection target image 50e and that the frame 60 can be moved and rotated.

Subsequently, in step S112, the frame display control unit 32B determines whether the discontinuities 52 of which at least a part is present within the frame 60 have a region superimposed on the frame 60, as described above. When there is no region superimposed on the frame 60, a negative determination is made in step S112, and the process proceeds to step S116. On the other hand, when there is a region superimposed on the frame 60, an affirmative determination is made in step S112, and the process proceeds to step S114.

In step S114, the frame display control unit 32B displays the portions 60A of the frame 60 superimposed on the discontinuities 52 in an emphasized manner, as described above with reference to Fig. 5.

Subsequently, in step S116, the auxiliary line display control unit 32C determines whether to display the first auxiliary line 64 and the second auxiliary line 66. As described above, the auxiliary line display control unit 32C switches between showing and hiding the first auxiliary line 64 and the second auxiliary line 66 in response to the auxiliary line display instruction button 70 displayed on the display 26 being operated by a user. Thus, the auxiliary line display control unit 32C detects the operation state of the auxiliary line display instruction button 70 and determines whether to display the first auxiliary line 64 and the second auxiliary line 66. When the first auxiliary line 64 and the second auxiliary line 66 are not to be displayed, a negative determination is made in step S116, and the process proceeds to step S122. On the other hand, when the first auxiliary line 64 and the second auxiliary line 66 are to be displayed, an affirmative determination is made in step S116, and the process proceeds to step S118.

In step S118, the auxiliary line display control unit 32C causes the first auxiliary line 64 and the second auxiliary line 66 to be displayed, as described above with reference to Fig. 6.

Subsequently, in step S120, the frame display control unit 32B moves the frame 60 so that the first auxiliary line 64 and the second auxiliary line 66 overlap each other, as described above with reference to Fig. 6.

Subsequently, in step S122, the score derivation unit 36 derives, based on the score information 25B, the scores of the discontinuities 52 of which at least a part is present within the frame 60, and further derives the total score thereof, as described above. The score derivation unit 36 outputs the scores of the individual discontinuities 52 and the total score that have been derived to the display control unit 32.

Subsequently, in step S124, the display control unit 32 causes the scores of the individual discontinuities 52 and the total score derived in the foregoing step S122 to be displayed near the individual discontinuities 52 and the frame 60.

Subsequently, in step S126, the frame display control unit 32B determines whether the frame 60 has been moved or rotated by a user. When the user does not move or rotate the frame 60, a negative determination is made in step S126, and the process proceeds to step S128.

In step S128, the report generation unit 38 determines whether to output the above-described report. As described above, when a user operation of the report output instruction button 72 has not been received, a negative determination is made in step S128, and the process proceeds to step S130.

In step S130, the inspection target image acquisition unit 30 determines whether an instruction to change the inspection target image 50 to be displayed has been given. As described above, when a user operation of the image change instruction button 71 has been received, an affirmative determination is made in step S130, and the process returns to step S100. In response to the inspection target image acquisition unit 30 acquiring the next inspection target image 50, the process is performed again from step S102. On the other hand, when a user operation of the image change instruction button 71 has not been received, a negative determination is made in step S130, the process returns to step S126, and the process of steps S126 and S128 is performed again.

On the other hand, when a user operation of the report output instruction button 72 is received, an affirmative determination is made in step S128, and the process proceeds to step S132. In step S132, the report generation unit 38 records, as evaluation information, the frame 60 and the region of the enlarged inspection target image 50e including at least the discontinuities 52 of which at least a part is present within the frame 60, in association with the total score derived by the score derivation unit 36, in a state in which the frame 60 and the region are displayed on the display 26, as described above. In addition, the report generation unit 38 generates a report by using the evaluation information, and outputs the generated report. The output destination of the report is not limited. For example, the report may be output to the storage unit 22 and stored in the storage unit 22, or may be output to an external device via the network I/F 28. The report may be displayed on the display 26 by the display control unit 32.

Subsequently, in step S134, the inspection target image display control unit 32A ends display of the inspection target image 50 and the enlarged inspection target image 50e, and the frame display control unit 32B ends display of the frame 60. Upon the end of the process of step S134, the control process illustrated in Fig. 7 ends.

As described above, in the control device 18 according to the above-described embodiments, the inspection target image display control unit 32A causes the display 26 to display the inspection target image 50 obtained by capturing an image of the inspection target 10 of a nondestructive inspection. When the displayed inspection target image 50 includes two or more discontinuities of the inspection target 10, the frame display control unit 32B causes the frame 60 for inspecting a discontinuity to be displayed in a size based on a predetermined dimension such that the frame 60 is superimposed on the inspection target image 50 and the enlarged inspection target image 50e and that the frame 60 is movable and rotatable relative to the inspection target image 50 and the enlarged inspection target image 50e.

As described above, with the control device 18 according to the present embodiment, it is possible to easily make an appropriate positional relationship between the frame 60 for inspecting a discontinuity and the discontinuities 52 included in the inspection target image 50 (enlarged inspection target image 50e), and thus it is possible to support the evaluation of the discontinuities of the inspection target 10.

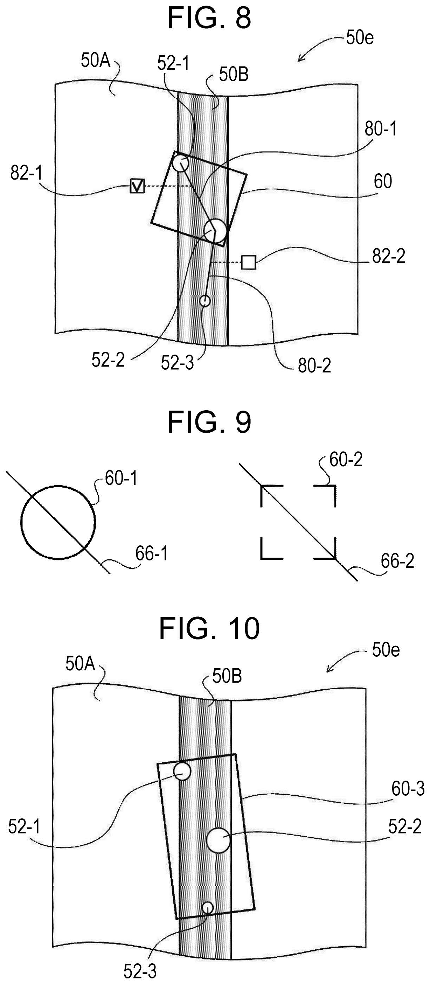

In the above-described embodiments, a description has been given of a case where the shape of the frame 60 is a rectangle, but the shape of the frame 60 is not limited to a rectangle. For example, the frame 60 may have a circular shape, like a frame 60-1 illustrated in Fig. 9. In this case, a second auxiliary line 66-1 is a line segment corresponding to the diameter of the circle. In addition, the frame 60 does not necessarily have to cover the entire inner region thereof, and the frame 60 may be formed of a partially interrupted line segment, like a frame 60-2 illustrated in Fig. 9. Also in the frame 60-2 illustrated in Fig. 9, a second auxiliary line 66-2 is a diagonal line of the rectangle defined by the frame 60-2, like the second auxiliary line 66 of the above-described frame 60 (see Fig. 6 and so forth).

When there are three or more discontinuities 52, the display control unit 32 may cause the display 26 to display information indicating, for every two discontinuities 52 among the three or more discontinuities 52, whether a user has performed visual determination and score confirmation. For example, when there are three or more discontinuities 52, the display control unit 32 may extract two discontinuities 52 as a pair, cause a straight line connecting the two discontinuities 52 of the extracted pair to be displayed, receive a user's input corresponding to the straight line, and perform display in accordance with the received input in association with the straight line. Fig. 8 illustrates an example of a display manner in this case. In the example illustrated in Fig. 8, a straight line 80-1 and a checkbox 82-1 associated with the straight line 80-1 are displayed for a pair of discontinuities 52-1 and 52-2. Furthermore, a straight line 80-2 and a checkbox 82-2 associated with the straight line 80-2 are displayed for a pair of discontinuities 52-2 and 52-3. In the example illustrated in Fig. 8, the pair of the discontinuities 52-1 and 52-2 has been confirmed, whereas the pair of the discontinuities 52-2 and 52-3 has not yet been confirmed. Upon confirming the pair of the discontinuities 52-1 and 52-2, a user checks the checkbox 82-1 through the input unit 27. As a result of clarifying the pair of the discontinuities 52 that has been confirmed, comprehensive evaluation of the discontinuities can be performed.

In the above-described embodiments, a description has been given of a case where, when the first auxiliary line 64 and the second auxiliary line 66 are displayed, the auxiliary line display control unit 32C automatically moves the frame 60 so that the first auxiliary line 64 and the second auxiliary line 66 overlap each other. However, it is not necessarily the auxiliary line display control unit 32C that moves the frame 60. For example, a user may manually move the frame 60 by using the input unit 27 so that the first auxiliary line 64 and the second auxiliary line 66 overlap each other. Furthermore, the movement of the frame 60 may be implemented by a combination of automatic movement by the auxiliary line display control unit 32C and manual movement by the user.

Furthermore, a description has been given of a case where the first auxiliary line 64 and the second auxiliary line 66 are displayed on the display 26. However, when the frame display control unit 32B automatically moves the frame 60 based on the first auxiliary line 64 and the second auxiliary line 66, the first auxiliary line 64 and the second auxiliary line 66 do not necessarily have to be displayed on the display 26.

The frame 60 used for evaluation may be changed during the control process (see Fig. 7). For example, the frame 60 illustrated in Fig. 5 may be changed to a frame 60-3 illustrated in Fig. 10, that is, a frame having a different size. In the case of using the frame 60-3 illustrated in Fig. 10, the score derivation unit 36 may derive, as a total score, a value obtained by adding the scores of the discontinuities 52-1, 52-2, and 52-3 included in the frame 60-3, or may derive, as a total score, a value obtained by converting the value obtained by adding the scores of the discontinuities 52-1, 52-2, and 52-3 into the size of the frame 60. In the latter case, for example, when the area of the rectangle defined by the frame 60-3 is twice the area of the rectangle defined by the frame 60, the score derivation unit 36 derives, as a total score, a value obtained by dividing the sum of the scores of the discontinuities 52-1, 52-2, and 52-3 by 2.

The display control unit 32 may cause the display 26 to display the scores of the individual discontinuities 52 and the total score derived by the score derivation unit 36.

Furthermore, in the above-described embodiments, the discontinuity detection unit 34 automatically detects a discontinuity 52 from the inspection target image 50. Alternatively, a user may check the inspection target image 50 or the enlarged inspection target image 50e displayed on the display 26 and designate the region of a discontinuity 52 in the displayed inspection target image 50 or enlarged inspection target image 50e by using the input unit 27, and the discontinuity detection unit 34 may detect the region designated by the user as a discontinuity 52.

In the above-described embodiments, the inspection target image display control unit 32A and the frame display control unit 32B use the display 26 included in the control device 18 as a display device for displaying the inspection target image 50 and the frame 60. However, the display device is not limited to the display 26. For example, the display device for displaying the inspection target image 50 and the frame 60 may be a display device provided outside the control device 18.

In the above-described embodiments, as the hardware structure of a processing unit that executes various processing operations of the inspection target image acquisition unit 30, the display control unit 32, the discontinuity detection unit 34, the score derivation unit 36, and the report generation unit 38, for example, the following various types of processors may be used. The various types of processors include, as described above, a CPU, which is a general-purpose processor that executes software (program) and functions as various processing units; a programmable logic device (PLD), which is a processor whose circuit configuration is changeable after manufacturing, such as a field programmable gate array (FPGA); a dedicated electric circuit, which is a processor having a circuit configuration designed specifically for performing specific processing, such as an application specific integrated circuit (ASIC); and the like.

A single processing unit may be constituted by one of these various types of processors or may be constituted by a combination of two or more processors of the same type or different types (for example, a combination of a plurality of FPGAs, or a combination of a CPU and an FPGA). A plurality of processing units may be constituted by a single processor.

Examples of constituting a plurality of processing units by a single processor are as follows. First, as represented by a computer of a client or server, a single processor is constituted by a combination of one or more CPUs and software, and the processor functions as a plurality of processing units. Secondly, as represented by a system on chip (SoC), a processor in which a single integrated circuit (IC) chip implements the function of an entire system including a plurality of processing units is used. In this way, various types of processing units are constituted by using one or more of the above-described various types of processors as a hardware structure.

Furthermore, as the hardware structure of the various types of processors, more specifically, electric circuitry formed by combining circuit elements such as semiconductor elements may be used.

In the above-described embodiments, a description has been given of a case where the control processing program 23 is stored (installed) in the storage unit 22 of the control device 18 in advance, but the present disclosure is not limited thereto. The control processing program 23 may be provided in the form of being recorded on a recording medium such as a compact disc read only memory (CD-ROM), a digital versatile disc read only memory (DVD-ROM), or a universal serial bus (USB) memory. The control processing program 23 may be downloaded from an external device via a network.

The present disclosure can also be applied to a program and a program product. To be specific, the control processing program 23 in the above-described embodiments may be provided as a program product. The program product includes any type of product for providing a program. For example, the program product includes a program provided via a network such as the Internet, and a non-transitory computer-readable recording medium such as a CD-ROM or a DVD storing the program.

In addition, it goes without saying that the configurations, operations, and the like of the radiographic image capturing device 16, the control device 18, and so forth described in the above-described embodiments are merely examples, and that the configurations, operations, and the like can be changed in accordance with circumstances without departing from the gist of the present disclosure. Furthermore, it goes without saying that the above-described embodiments may be combined as appropriate.

Regarding the above-described embodiments, the following appendices are further disclosed.

### Appendix 1

A control device including at least one processor,
the at least one processor being configured to:
cause a display device to display an inspection target image obtained by capturing an image of an inspection target of a nondestructive inspection; and
when the displayed inspection target image includes two or more discontinuities of the inspection target, cause a frame for inspecting a discontinuity to be displayed in a size based on a predetermined dimension such that the frame is superimposed on the inspection target image and that at least one of movement or rotation of the frame relative to the inspection target image is possible.

### Appendix 2

The control device according to appendix 1, wherein the frame is a figure corresponding to a gauge.

### Appendix 3

The control device according to appendix 1, wherein the frame is a figure equivalent to a gauge defined by a standard of Japanese Industrial Standards (JIS) or International Organization for Standardization (ISO) regarding a nondestructive inspection.

### Appendix 4

The control device according to any one of appendix 1 to appendix 3, wherein the at least one processor is configured to:
relatively move the frame such that a first auxiliary line and a second auxiliary line have a predetermined positional relationship, the first auxiliary line being provided in accordance with positions of the discontinuities, the second auxiliary line being provided in accordance with a position of the frame.

### Appendix 5

The control device according to appendix 4, wherein the first auxiliary line is a line segment connecting centers of gravity of two of the discontinuities.

### Appendix 6

The control device according to appendix 4, wherein
the first auxiliary line is a line segment connecting points in regions of two of the discontinuities, and
when a plurality of the line segments are present, a longest line segment among the plurality of line segments is regarded as the first auxiliary line.

### Appendix 7

The control device according to appendix 4, wherein
when the frame has a rectangular shape, the second auxiliary line is at least one of diagonal lines of the rectangular frame, and
when the frame has a circular shape, the second auxiliary line is at least one line corresponding to a diameter of the circular frame.

### Appendix 8

The control device according to any one of appendix 1 to appendix 7, wherein the at least one processor is configured to:
when the discontinuity of which at least a part is present within the frame has a region superimposed on the frame, present information indicating that the discontinuity has the region.

### Appendix 9

The control device according to appendix 8, wherein the at least one processor is configured to:
to present the information, cause a portion of the frame superimposed on the discontinuity that is not entirely within the frame to be displayed so as to be emphasized relative to an other portion.

### Appendix 10

The control device according to any one of appendix 1 to appendix 9, wherein the at least one processor is configured to:
when the discontinuities are three or more discontinuities, extract two discontinuities as a pair;
cause a straight line connecting the two discontinuities of the extracted pair to be displayed;
receive a user's input corresponding to the straight line; and
perform display in accordance with the received input in association with the straight line.

### Appendix 11

The control device according to any one of appendix 1 to appendix 10, wherein the at least one processor is configured to:
cause the inspection target image to be displayed, the inspection target image including an inspection target image of a most part of an image capturing range of the inspection target and an enlarged inspection target image in which a part of the inspection target image is enlarged; and
when one of the frame displayed so as to be superimposed on the inspection target image of the most part of the inspection target and the frame displayed so as to be superimposed on the enlarged inspection target image is moved or rotated relative to the inspection target image, move or rotate an other of the frames together.

### Appendix 12

The control device according to any one of appendix 1 to appendix 11, wherein
a correspondence between at least one of a type, a size, or a length of the discontinuity and a score is predetermined, and
the at least one processor is configured to:
   derive, based on the correspondence, a score of the discontinuity of which at least a part is present within the frame; and
   when a plurality of the discontinuities of which at least a part is present within the frame are present, further derive a total score.

### Appendix 13

The control device according to appendix 12, wherein the at least one processor is configured to:
record the frame and a region of the inspection target image including at least the discontinuities of which at least a part is present within the frame, in association with the total score, in a state in which the frame and the region are displayed on the display device.

### Appendix 14

A control method in which a processor included in a control device:
causes a display device to display an inspection target image obtained by capturing an image of an inspection target of a nondestructive inspection; and
when the displayed inspection target image includes two or more discontinuities of the inspection target, causes a frame for inspecting a discontinuity to be displayed in a size based on a predetermined dimension such that the frame is superimposed on the inspection target image and that at least one of movement or rotation of the frame relative to the inspection target image is possible.

### Appendix 15

A control program for causing a processor included in a control device to execute a process comprising:
causing a display device to display an inspection target image obtained by capturing an image of an inspection target of a nondestructive inspection; and
when the displayed inspection target image includes two or more discontinuities of the inspection target, causing a frame for inspecting a discontinuity to be displayed in a size based on a predetermined dimension such that the frame is superimposed on the inspection target image and that at least one of movement or rotation of the frame relative to the inspection target image is possible.

The disclosure of JP2023-119447 filed on July 21, 2023 is incorporated herein by reference in its entirety. All documents, patent applications, and technical standards described in this specification are incorporated in this specification by reference to such a degree that each document, patent application, and technical standard are specifically and individually described as being incorporated by reference.

## Claims

1. A control device comprising at least one processor, wherein the processor is configured to:
cause a display device to display an inspection target image obtained by capturing an image of an inspection target of a nondestructive inspection; and
when the displayed inspection target image includes two or more discontinuities of the inspection target, cause a frame for inspecting a discontinuity to be displayed in a size based on a predetermined dimension such that the frame is superimposed on the inspection target image and that at least one of movement or rotation of the frame relative to the inspection target image is possible.

2. The control device according to claim 1, wherein the frame is a figure corresponding to a gauge.

3. The control device according to claim 1, wherein the frame is a figure equivalent to a gauge defined by a standard of Japanese Industrial Standards (JIS) or International Organization for Standardization (ISO) regarding a nondestructive inspection.

4. The control device according to claim 1, wherein the processor is configured to relatively move the frame such that a first auxiliary line and a second auxiliary line have a predetermined positional relationship, the first auxiliary line being provided in accordance with positions of the discontinuities, the second auxiliary line being provided in accordance with a position of the frame.

5. The control device according to claim 4, wherein the first auxiliary line is a line segment connecting centers of gravity of two of the discontinuities.

6. The control device according to claim 4, wherein:
the first auxiliary line is a line segment connecting points in regions of two of the discontinuities, and
when a plurality of the line segments are present, a longest line segment among the plurality of line segments is regarded as the first auxiliary line.

7. The control device according to claim 4, wherein:
when the frame has a rectangular shape, the second auxiliary line is at least one of diagonal lines of the rectangular frame, and
when the frame has a circular shape, the second auxiliary line is at least one line corresponding to a diameter of the circular frame.

8. The control device according to claim 1, wherein the processor is configured to, when the discontinuity of which at least a part is present within the frame has a region superimposed on the frame, present information indicating that the discontinuity has the region.

9. The control device according to claim 8, wherein the processor is configured to, to present the information, cause a portion of the frame superimposed on the discontinuity that is not entirely within the frame to be displayed so as to be emphasized relative to an other portion.

10. The control device according to claim 1, wherein the processor is configured to, when the discontinuities are three or more discontinuities:
extract two discontinuities as a pair;
cause a straight line connecting the two discontinuities of the extracted pair to be displayed;
receive a user's input corresponding to the straight line; and
perform display in accordance with the received input in association with the straight line.

11. The control device according to claim 1, wherein the processor is configured to:
cause the inspection target image to be displayed, the inspection target image including an inspection target image of a most part of an image capturing range of the inspection target and an enlarged inspection target image in which a part of the inspection target image is enlarged; and
when one of the frame displayed so as to be superimposed on the inspection target image of the most part of the inspection target and the frame displayed so as to be superimposed on the enlarged inspection target image is moved or rotated relative to the inspection target image, move or rotate an other of the frames together.

12. The control device according to claim 1, wherein:
a correspondence between at least one of a type, a size, or a length of the discontinuity and a score is predetermined, and
the processor is configured to:
derive, based on the correspondence, a score of the discontinuity of which at least a part is present within the frame; and
when a plurality of the discontinuities of which at least a part is present within the frame are present, further derive a total score.

13. The control device according to claim 12, wherein the processor is configured to record the frame and a region of the inspection target image including at least the discontinuities of which at least a part is present within the frame, in association with the total score, in a state in which the frame and the region are displayed on the display device.

14. A control method in which a processor included in a control device:
causes a display device to display an inspection target image obtained by capturing an image of an inspection target of a nondestructive inspection; and
when the displayed inspection target image includes two or more discontinuities of the inspection target, causes a frame for inspecting a discontinuity to be displayed in a size based on a predetermined dimension such that the frame is superimposed on the inspection target image and that at least one of movement or rotation of the frame relative to the inspection target image is possible.

15. A control program for causing a processor included in a control device to execute a process comprising:
causing a display device to display an inspection target image obtained by capturing an image of an inspection target of a nondestructive inspection; and
when the displayed inspection target image includes two or more discontinuities of the inspection target, causing a frame for inspecting a discontinuity to be displayed in a size based on a predetermined dimension such that the frame is superimposed on the inspection target image and that at least one of movement or rotation of the frame relative to the inspection target image is possible.
